# EUROPÄISCHE PATENTSCHRIFT

(11) **EP 3 111 200 B1**
(45) Veröffentlichungstag und Bekanntmachung des Hinweises auf die Patenterteilung: **15.01.2020**
(21) Anmeldenummer: 14793016.8
(22) Anmeldetag: 20.10.2014
(51) Int. Cl.: G01N 21/90, G06T 7/00

(54) **VERFAHREN ZUR ERKENNUNG VON RISSEN IN DEN WANDUNGEN VON HOHLGLASARTIKELN**
METHOD FOR DETECTING FLAWS IN THE WALLS OF HOLLOW GLASS ITEMS
PROCÉDÉ DE DÉTECTION DE FISSURES DANS LES PAROIS D'ARTICLES EN VERRE CREUX

(30) Priorität: 26.02.2014 DE 102014002582
(43) Veröffentlichungstag der Anmeldung: 04.01.2017
(73) Patentinhaber: Heye International GmbH, 31683 Obernkirchen (DE)
(72) Erfinder: STÜWE, Hartwin, 31693 Hespe (DE)
(74) Vertreter: Sobisch, Peter
(86) Internationale Anmeldenummer: PCT/EP2014/002827
(87) Internationale Veröffentlichungsnummer: WO 2015/127950

(56) Entgegenhaltungen:
- EP-A1- 1 560 018
- WO-A1-96/41299
- WO-A1-2012/172695
- US-A- 5 204 911

## Beschreibung

Die Erfindung bezieht sich auf ein Verfahren entsprechend dem Oberbegriff des Anspruchs 1.

Aus der EP 1 560 018 A1 sind ein Verfahren sowie eine Vorrichtung zur Herstellung von Referenzbildern bekannt, die bei der Prüfung von Hohlglasartikeln einzusetzen sind und in der Folge zur Erkennung von Werkstofffehlern des Artikels verwendet werden, indem das hergestellte Referenzbild, eine Schablone mit dem Bild eines jeweils zu prüfenden Artikels verglichen wird. Zur Herstellung dieser Schablone werden eine Vielzahl von Hohlglasartikeln benutzt, die als Muster dienen, die ausgehend von einer stationär angeordneten Lichtquelle beleuchtet werden, der eine Mehrzahl von CCD-Kameras stationär gegenüberliegend angeordnet ist, die zur Erstellung von Teilbildern des um seine Längsachse rotierenden Artikels unter unterschiedlichen Aufnahmewinkeln eingerichtet sind. Der Vergleich des so erstellten, auf der Auswertung einer Vielzahl von Bildern der Hohlglasartikel beruhenden Referenzbildes mit entsprechenden Teilbildern von auf ein Vorhandensein von Werkstofffehlern der zu prüfenden Artikeln findet pixelweise statt, indem geprüft wird, ob eine pixelweise bzw. örtlich festgestellte Helligkeit des Bildes des zu prüfenden Artikels innerhalb eines definierten Toleranzbereichs im Vergleich zu den entsprechenden örtlichen Helligkeitswerten des Referenzbildes liegt. Ist der Toleranzbereich überschritten, wird der betreffende Artikel als fehlerhaft qualifiziert. Auf diese Weise ist nicht in allen Fällen die Herkunft einer reflektierten empfangenen Strahlung aufklärbar, insbesondere nicht, ob es sich im einzelnen Fall um eine von einem tatsächlichen Fehler des Glaswerkstoffs ausgehende Strahlung oder lediglich um Störstrahlung handelt.

Aus dem Dokument CH 652826 A5 ist eine Vorrichtung zum Erkennen von Rissen in transparenten Körpern auf optischem Wege bekannt, bei der einem, während einer Überprüfung um seine Längsachse rotierenden Glaskörper eine Anzahl Strahlungsquellen zugeordnet ist, denen in Detektorblöcken untergebrachte Detektoren als Strahlungsempfänger gegenüber stehen. Um einen Empfang von Störstrahlung entgegen zu wirken, werden Teilsysteme gebildet, die jeweils aus Strahlern und Strahlungsempfängern bestehen, wobei diese Teilsysteme nacheinander und nicht gleichzeitig aktiviert werden. Durch die Einrichtung dieser Teilsysteme ist zwar eine Unterdrückung von Störstrahlung aus der Umgebung möglich. Es ist jedoch ein hohes Maß an Erfahrung für eine zweckmäßige, dem Einzelfall, hier dem zu prüfenden Glaskörper angepasste Darstellung der Teilsysteme erforderlich.

Eine Störstrahlung, welche die Aussagekraft der Auswertung der empfangenen Strahlung beeinträchtigt, kann in vielfältiger Weise aus den Umgebungsbedingungen entstehen, z. B. in der Form von Fremdlichtquellen, jedoch auch durch die Form des zu prüfenden Hohlglasartikels bedingt sein, z. B. durch Reflexionen an rotationssymmetrischen Strukturelementen, welche unabhängig von einer eventuellen Rotation des Hohlglasartikels, bzw. dem jeweiligen Aufnahmewinkel sind, unter dem diese Reflexionen von einem fest angeordneten Strahlungsempfänger aufgezeichnet werden. Die empfangene Strahlung ist somit stets aus Nutz- und Störsignalen zusammengesetzt.

Zur Trennung von Nutz- und Störsignalen in Verbindung mit der Rissüberprüfung von Hohlglasartikeln sind eine Vielzahl von Lösungsmöglichkeiten bekannt geworden. So sind in der EP 0 692 395 B1 ein Verfahren und eine Vorrichtung zur Bildverarbeitung zur Prüfung auf lichtreflektierende Fehler beschrieben, wobei ein Hohlglasartikel um seine Längsachse rotiert und wobei von einem einfallenden Lichtbündel nach Maßgabe der Rotation aufeinanderfolgende, um einen Drehwinkel zueinander versetzte Bilder erstellt werden. Durch Vergleich wenigstens zweier aufeinanderfolgender Bilder werden während der Auswertung gleichbleibend reflektierte Streureflexionen von veränderlichen, örtliche Defekte des Hohlglasartikels indizierenden Nutzreflexionen unterschieden. Die Auswertung der Reflexionen ist hierbei somit von der Reihenfolge der erstellten Bilder abhängig.

Die Unterscheidung von Nutz- und Störsignalen ist von wesentlicher Bedeutung bei der automatisierten Risserkennung in Hohlglasartikeln. Eine fehlerhafte Interpretation eines Stör- als Nutzsignal führt zu einem nicht erforderlichen Verwerfen eines Artikels als unbrauchbar. Somit besteht ein starkes Interesse daran, jegliche Störsignale effektiv zu erkennen und auszublenden, um eine Prüfung des jeweiligen Artikels ausschließlich auf der Grundlage von Nutzsignalen durchführen zu können.

Es ist die Aufgabe der Erfindung, ein Verfahren der eingangs dargelegten Art mit Hinblick auf eine sichere Ausblendung bzw. Unterdrückung von Störsignalen sowie eine einfachere Durchführbarkeit hin zu verbessern. Gelöst ist diese Aufgabe bei einem solchen Verfahren durch die Merkmale des Kennzeichnungsteils des Anspruchs 1.

Erfindungswesentlich ist, dass von dem um seine Längsachse rotierenden, auf ein Vorhandensein von Defekten zu untersuchenden Hohlglasartikel eine ursprüngliche auch Fehlermerkmale enthaltende Bildserie erstellt wird, die aus einzelnen Bildern besteht, auf denen Sensorbereiche abgebildet sind, welche Teile des Hohlglasartikels unter unterschiedlichen Betrachtungswinkeln zeigen. Die ursprüngliche Bildserie wird zur Darstellung einer binarisierten Bildserie benutzt, welche zur Erfassung von gehäuft auftretenden Reflexionen dient, wobei ausgehend von dieser binarisierten Bildreihe ein zweidimensionales Histogrammbild erstellt wird. Wesentlich ist ferner, dass unter Verwendung der so erstellten Ausblendungsschablone die eingangs genannte, den Hohlglasartikel abbildende, aus Sensorbereichen zusammengesetzte, auch statische Reflexionen enthaltende Bildserie maskiert wird, so dass eine maskierte Bildserie entsteht, welche keine statische Reflexionen mehr enthält und welche der weiteren Auswertung nur noch betreffend das Vorhandensein von Defekten in der Form von dynamischen Reflexionen zugrunde gelegt wird.

Die Ausblendungsschablone wird durch ein auf einem Aufsummieren der Häufigkeitswerte der, jeweils signifikante Reflexionen beschreibenden Pixel aller Bilder der binarisierten Bildserie gebildeten Histogramms erstellt, wobei dieses Histogramm weiter zur Herstellung der Ausblendungsschablone benutzt wird. Für den Vorgang des Aufsummierens der Häufigkeitswerte ist die zeitliche Reihenfolge der auszuwertenden Bilder der Bildserie ohne Bedeutung. Die Ausblendungsschablone besteht aus einer zweidimensionalen Zusammenstellung in den Sensorbereichen des Histogrammbildes, in denen die als statische Reflexionen interpretierbaren Pixelbereiche als "Wolken" in einem jeden der Sensorbereiche gekennzeichnet sind. Zur Unterscheidung statischer und dynamischer Re-flexionen im Rahmen der Erstellung der binarisierten Bildserie kann der Umstand herangezogen werden, dass die statischen Reflexionen anders als die dynamischen Reflexionen unabhängig vom Betrachtungs- bzw. Drehwinkel des Hohlglasartikels in vielen Bildern der ursprünglichen Bildserie gleichförmig vorhanden sind, so dass alle, dem Fachmann geläufige, auf diesem Umstand aufbauende Techniken zur Trennung statischer und dynamischer Reflexionen im Rahmen der Erfindung nutzbar sind.

Die Ausblendungsschablone wird dazu benutzt, eine komprimierte, statische und dynamische Reflexionen aufweisende Bildserie zu maskieren. Es ist dies die den Hohlglasartikel oder Teile desselben unter unterschiedlichen Blickwinkeln während dessen Umdrehung darstellende ursprüngliche Bildserie. Durch die Benutzung einer komprimierten Bildserie ausgehend von dieser ursprünglich aufgenommenen Bildserie kann die Auswertung auf Teile der von den Sensorbereichen erfassten Abbildungen des zu untersuchenden Hohlglasarti-kels beschränkt werden, welche als besonders relevant angesehen werden. Um welche Teile es sich hierbei handelt, kann nutzerseitig individuell festgelegt werden.

Der Begriff "Sensorbereich" beschreibt in diesem Zusammenhang den von jeweils einem Strahlungsempfangselement bzw. Sensor erfassten und abgebildeten Teil des zu prüfenden Hohlglasartikels.

Der Begriff "komprimierte Bildserie" beschreibt in diesem Zusammenhang eine Bildserie, welche aus Bildern besteht, die jeweils ausgewählte und damit festgelegte Zonen in den von einem Strahlungsempfangselement erfassten Bereich des Hohlglasartikels zeigen.

Die Merkmale des Anspruchs 2 und 3 sind auf die Ausgestaltung des Verfahrensschritts gerichtet, der die Gewinnung der Ausblendungsschablone aus den aufsummierten Häufigkeitswerten des Histogrammbildes zum Ziel hat. Hierzu wird eine morphologische Operation sowie eine Binarisierung nach Maßgabe eines Schwellenwertes (Anzahl der Bilder - x) durchgeführt, wobei es sich bei der Anzahl der Bilder um die Zahl der Bilder der ursprünglichen Bildserie handelt, und wobei "X" ein nutzerseitig vorgebbarer Wert ist, der einer positiven ganzen Zahl von beispielsweise 1 bis 20 entspricht, so dass der Schwellenwert den Anteil der ursprünglichen Bilder beschreibt, bei dem die Bedingung erfüllt ist, dass ein oberhalb gelegener Häufigkeitswert auftritt und bei der Auswertung berücksichtigt wird. Auf diese Weise wird ein nutzerseitig vorgebbarer Toleranzbereich für den Häufigkeitswert definiert, bei dessen Überschreiten eine Berücksichtigung erst einsetzt.

Die Merkmale der Ansprüche 4 und 5 sind auf eine Ausgestaltung des Binarisierungsverfahrens der ursprünglichen Bildserie gerichtet, welche auf die Erstellung der vorstehend genannten binarisierten Serie gerichtet ist. Durch individuelle Festlegung der Schwellenwerte der Binarisierung der einzelnen Sensorbereiche unter anderem in Abhängigkeit von der Position der Strahlungsempfangselemente in Verbindung mit einem Aufsummieren der Häufigkeitswerte von dominante Reflexionen beschreibenden Pixeln ist eine Unterscheidung statischer und dynamischer Reflexionen dargestellt. Dies führt zu einem Histogrammbild, welches die Lage sowie die Häufigkeitsverteilung der einzelnen Pixel erkennbar macht, soweit ihr jeweiliger Häufigkeitswert oberhalb des Schwellenwertes des einzelnen Sensorbereiches liegt. Nur unter dieser Bedingung wird ein durch dieses Pixel gekennzeichneter Bereich als ein Bereich interpretiert, in dem statische Reflexionen erkannt worden sind.

Die Merkmale der Ansprüche 6 und 7 sind auf die weitere Bearbeitung des die aufsummierte Häufigkeit der als statische Reflexion interpretierbaren Pixel darstellenden Histogramms gerichtet. Wesentlich ist, dass das aus dem Histogrammbild gewonnene Bild aufgrund der Toleranzbereiche der Pixelpositionen Lücken zwischen den einzelnen Pixeln aufweisen kann, die mit Methoden der Bildbearbeitung zwecks Erstellung eines als Ausblendungsschablone nutzbaren weiteren zweidimensionalen Bildes verarbeitet werden. Auf diese Weise ergeben sich "wolkenartige" Flächenbereiche eines jeden Sensorbereiches, die als Bereiche statischer Reflexionen interpretiert werden.

Entsprechend den Merkmalen der Ansprüche 8 und 9 sind im Rahmen der Erkennung von Defekten die Bilder der maskierten Bildserie in beliebiger Reihenfolge auswertbar. Dieser Umstand eröffnet im Vergleich zum Stand der Technik Freiheiten bei der konkreten Gestaltung des weiteren Auswertungsverfahrens.

Die Merkmale der Ansprüche 10 und 11 sind auf die weitere Ausgestaltung der im Rahmen der Abwicklung des Verfahrens aufzunehmenden Bildserien, Bilder und Sensorbereiche einschließlich deren Bestimmungsgrößen gerichtet.

Man erkennt, dass mit dem erfindungsgemäßen Verfahren eine automatisiert durchführbare, reproduzierbare Methode zur Aufbereitung von zur Defektfeststellung zu benutzender Bildserien vorgestellt ist, auf deren Grundlage das Ergebnis einer Defekterkennung hinsichtlich einer Vermeidung von Fehlinterpretationen von Reflexionen verbessert werden kann.

Die Erfindung wird im Folgenden unter Bezugnahme auf die beiliegenden Zeichnungsfiguren näher erläutert werden. Es zeigen:

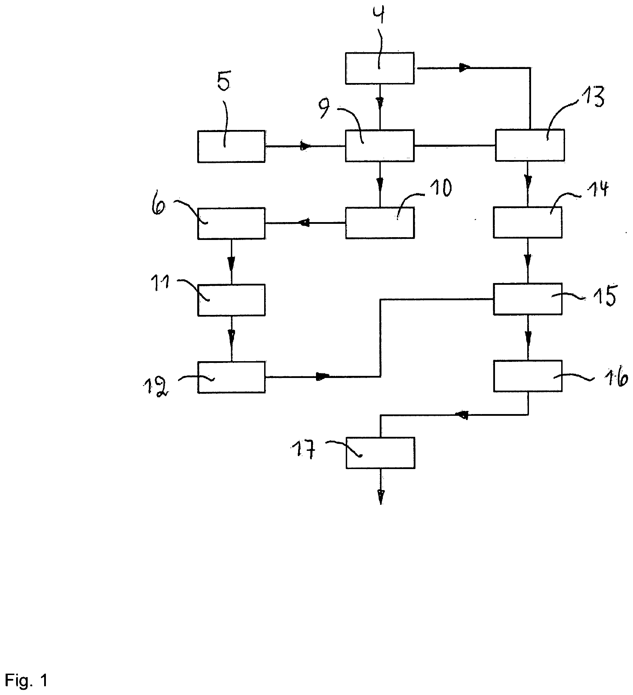

- Fig. 1: eine schematische Darstellung des erfindungsgemäßen Verfahrensablaufs;

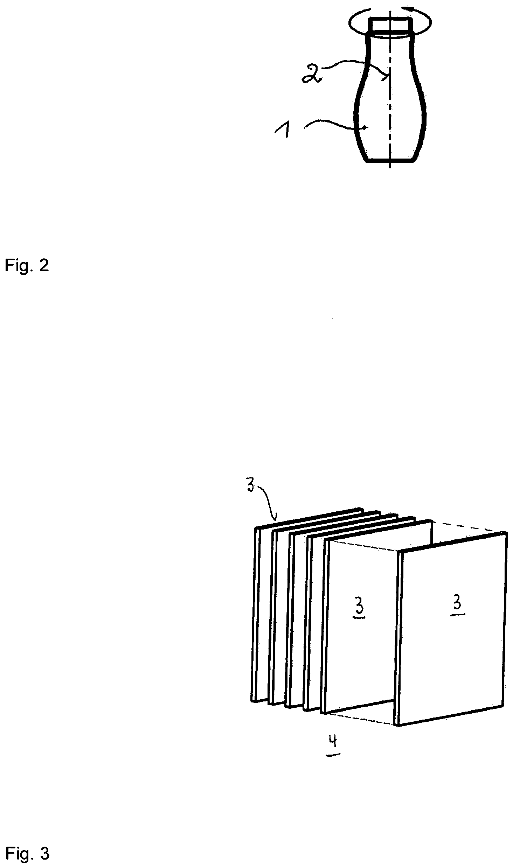

- Fig. 2: einen zur Aufnahme einer Bildserie sich drehenden Hohlglasartikel;
- Fig. 3: eine Darstellung einer von einem Hohlglasartikel aufgenommenen Bildserie;.
- Fig. 4: eine Darstellung der Schwellenwerte für die Binarisierung von Sensorbereichen;

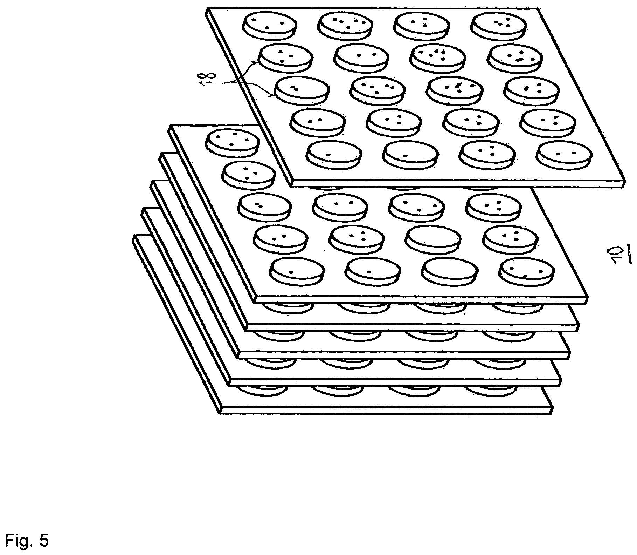

- Fig. 5: eine Darstellung der Bildserie nach der Binarisierung (unter Hinzufügung von Schwellenwerten);
- Fig. 6: eine Darstellung eines Histogramms eines Sensorbereichs;
- Fig. 7: eine Darstellung eines Histogrammbildes mit für jeden Sensorbereich unterschiedlichen Schwellenwerten;

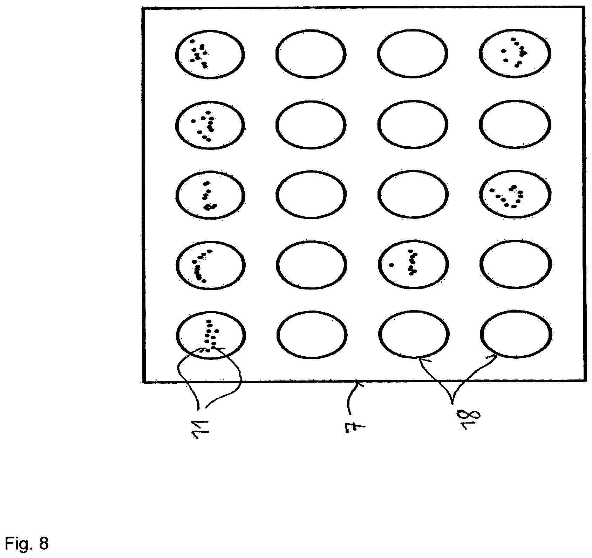

- Fig. 8: eine Darstellung eines Ausblendungs-Schablonenbildes mit Lücken;

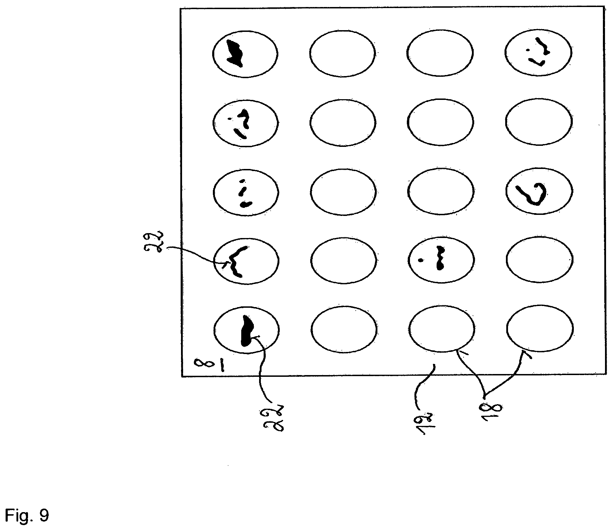

- Fig. 9: eine Darstellung einer Ausblendungsschablone.

Der auf ein Vorhandensein von Defekten wie z. B. Rissen zu untersuchende Hohlglasartikel 1 wird zur Durchführung der Untersuchung in Umdrehungen um seine Längsachse 2 versetzt, wobei mittels einer Mehrzahl von Strahlungsempfangselementen, im vorliegenden Fall zwanzig Sensoren, die mit Abstand voneinander fest angeordnet sind, während der Umdrehung nach Maßgabe deren fester Winkelpositionen achtzig Bilder 3 nacheinander aufgezeichnet werden. Zu diesem Zweck stehen die Sensoren jeweils über Bildleiter mit einer zeichnerisch nicht dargestellten Hochgeschwindigkeitskamera in Verbindung. Diese Bilder 3 bilden eine ursprüngliche Bildserie 4 des Hohlglasartikels 1, die der sich anschließenden Auswertung zugrunde gelegt wird.

Ein jedes der Bilder 3 besteht aus einer, der Anzahl der Sensoren entsprechenden Anzahl Sensorbereichen 18. Zu diesem Zweck wird der Hohlglasartikel 1 mittels zeichnerisch ebenfalls nicht dargestellter Strahlungselemente angestrahlt, wobei in den Aufnahmebereich der Sensoren neben dynamischen, beispielsweise einen Riss anzeigenden Reflexionen auch statische, Störreflexionen oder durch bestimmte rotationssymmetrische Strukturmerkmale des Hohlglasartikels 1 wie z. B. ein Flaschenhalsgewinde bedingte Signalanteile gelangen, die für eine Auswertung irrelevant und daher zu entfernen sind. Die als Graustufenbilder vorliegenden Bilder 3 bzw. die Sensorbereiche 18 der Bildserie 4 enthalten beide Signalanteile.

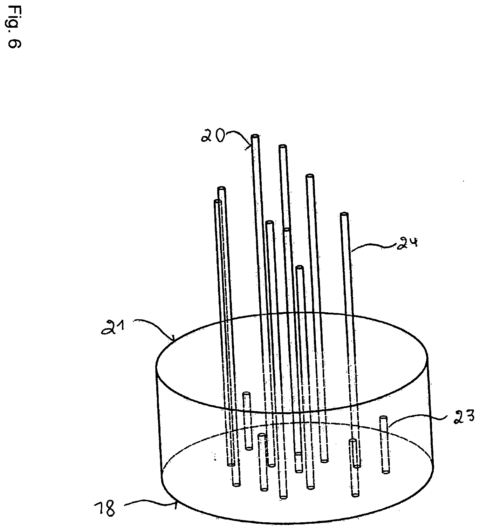

Risse erscheinen auf den Bildern 3 als helle weiße Flecken, deren Position auf den Bildern bzw. deren Sensorbereichen 18 (Fig. 6) sich nach Maßgabe des Drehwinkels des Hohlglasartikels 1 um die Achse 2 deutlich ändern, wohingegen die durch rotationssymmetrische Strukturmerkmale bedingten Störreflexe ihre Position auf den Bildern 3 während der Rotation nicht bzw. nur minimal ändern. Dieser Umstand wird in einer im Folgenden zu beschreibenden Weise zur Trennung der genannten Signalanteile benutzt.

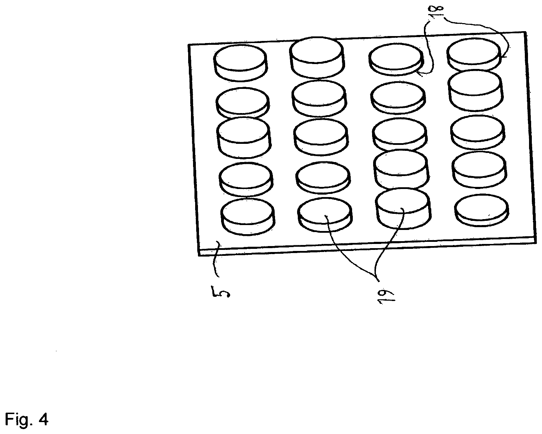

Mit 5 (Fig.4) ist ein Grauwert-Schwellenbild bezeichnet, auf welchem den unterschiedlichen Sensorbereichen 18 der genannten zwanzig Sensoren in Abhängigkeit von deren jeweiliger Position relativ zu dem rotierenden Hohlglasartikel 1 unterschiedliche Schwellenwerte 19 zugeordnet werden. Die Schwellenwerte 19 werden mit den Grauwerten der Sensorbereiche 18 der Bilder 3 überlagert. Hierbei entsteht aus einem jeden der ursprünglichen Graustufenbilder der Bildserie 4 ein binarisiertes Bild, welches die Lage von dynamischen und statischen Reflexionen enthält. Jedes Pixel eines Sensorbereiches 18, dessen Grauwert über dessen jeweiligem Schwellenwert 19 liegt, wird als Fleckenpixel und jedes Pixel, dessen Grauwert unter dem jeweiligen Schwellenwert 19 liegt, wird als Hintergrund interpretiert. Jede im Rahmen dieser Binarisierung 9 gewonnene Information im Sensorbereich 18 enthält somit Anteile, die Fleckenpixel oder Anteile, die Hintergrundpixel beschreiben. Es entsteht aus der ursprünglichen Bildserie 4 eine binarisierte Bildserie 10, deren Sensorbereiche 18 statische und dynamische Signalanteile abbilden.

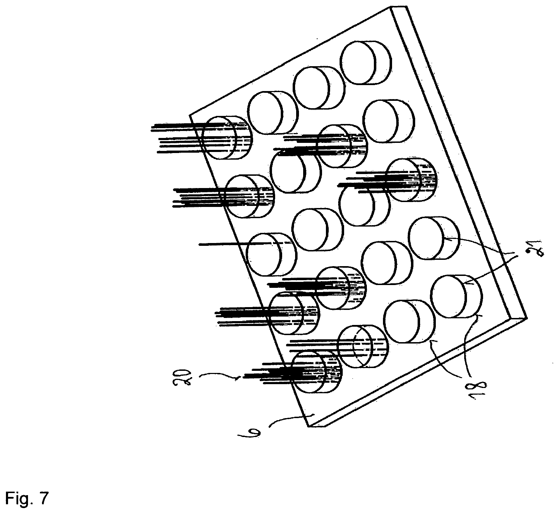

In einem Histogrammbild 6 (Fig. 7) wird eine Zusammenfassung der Ergebnisse der binarisierten Bildserie 10 in einem Bild hergestellt, indem örtlich, das heißt bezogen auf die Pixelpoition eines jeden Sensorbereichs 18 die Häufigkeit des Auftretens eines Fleckenpixel dargestellt wird. Das Histogrammbild 6 als Auswertung der binarisierten Bildserie 10 enthält zwanzig Sensorbereiche 18, innerhalb welcher jeweils die Positionen der Fleckenpixel erkennbar sind. Aus Gründen der Einfachheit ist in Fig. 7 darauf verzichtet worden, die Unterschiedlichkeit der einzelnen Schwellenwerte 21 der Sensorbereiche 18 darzustellen. Ein Pixel eines Sensorbereiches 18 wird aufgrund seiner aufsummierten Häufigkeit 20 jedoch erst dann als relevantes Fleckenpixel interpretiert, wenn der Häufigkeitswert oberhalb des jeweiligen Schwellenwertes 21 des Sensorbereiches 18 liegt. (Fig. 6) Man erkennt, dass die den einzelnen Sensorbereichen 18 zugeordneten Pixel solche umfassen, die dynamische Signalanteile 23 beschreiben, deren Wert unterhalb des jeweiligen Schwellenwertes 21 liegt und solche Signalanteile 24, deren Wert oberhalb des Schwellenwertes 21 liegt.

Das Histogrammbild 6 wird unter Benutzung eines Schwellenwertes binarisiert, der dem Wert (Anzahl der Bilder - x) entspricht, wobei der Wert "x" nutzer-seitig wählbar ist und für jeden Sensorbereich 18 wählbar ist. Im vorliegenden Fall entspricht der Schwellenwert somit einem Wert (80 - x). Jeder Bereich oberhalb dieses Schwellenwertes 21 beschreibt die Lage eines statischen Fleckenpixel und erscheint als einzelner Punkt 11 in einem Bild 7, welches in den Fleckenpixelbereichen noch Lücken aufweist. Durch den Wert "x" ist somit bei gegebener Anzahl der Bilder der Schwellenwert 21 festlegbar. Dieser Wert "x" kann individuell für jeden Sensorbereich definiert werden.

Das Bild 7 ist durch eine Anzahl Sensorbereiche 18 gekennzeichnet, deren Anzahl wiederum derjenigen der eingangs genannten Strahlungsempfangselemente entspricht. Ausgehend von diesem Bild 7 wird durch eine auf das Schließen dieser Lücken gerichtete morphologische Operation ein als eine zweidimensionale Ausblendungsschablone 12 nutzbares, wiederum aus Sensorbereichen 18 zusammengesetztes Bild 8 hergestellt. Im Rahmen dieser Operation werden somit die festgestellten Fleckenpixel um die toleranzbedingten Schwankungsbreiten ergänzt und auf diese Weise die bestehenden Lücken geschlossen. Auf diese Weise entstehen wolkenartige Bereiche 22, die die Lage von Fleckenpixeln beschreiben

Das Histogrammbild 6 sowie die Bilder 7 und 8 weisen jeweils eine Fläche auf, die einem Kamerabild der eingangs genannten Hochgeschwindigkeitskamera entspricht

Die Bildserie 4, deren Bilder 3 in den Sensorbereichen 18 im Ausgangszustand als Graustufenverteilung vorliegen, wird einer Bildhintergrundabtrennung 13 ausgehend von den durch den Anwender festgelegten Auswertezonen (area of interest, aoi) unterzogen. Diese Maßnahme dient dazu, solche Bildanteile aus den Abbildungen der Sensorbereiche zu entfernen, die für eine weitere Auswertung irrelevant sind, so dass auf eine nähere Betrachtung verzichtet werden kann. Es entsteht eine Bildserie 14, die nur noch die vom Anwender zur Auswertung festgelegten Zonen in den Sensorbereichen 18 enthält. Diese Zonen beschreiben die Lage sowohl statischer als auch dynamischer Reflexionen. Die Bilder der so erstellten Bildserie 14 weisen jeweils eine Fläche auf, die einem Kamerabild der Hochgeschwindigkeitskamera entspricht. Auf diesen Bildern ist jeder Punkt und damit die Lage eines jeden Punktes mittels eines Koordinatensystems lokalisierbar.

Die Bilder der Bildserie 14 werden anschließend mit der Ausblendungsschablone 12 maskiert, so dass als Ergebnis dieser Maskierung 15 eine maskierte Objektbildserie 16 entsteht, auf deren einzelnen Bildern die Fleckenpixelbereiche, die statische Reflexionen beschreiben, ausgeblendet sind. Es entsteht auf diese Weise eine Serie von Bildern mit maskierten Zonen in den Sensorbereichen 18, die für eine Auswertung 17 auf ein Auftreten von Rissen und vergleichbaren Defekten aufbereitet sind. Die Bildbereiche der Störreflexionen sind durch die Maskierung mittels der Ausblendungsschablone bereits eliminiert.

### Bezugszeichenliste:

- 1.: Hohlglasartikel
- 2.: Längsachse
- 3.: Bild
- 4.: Bildserie
- 5.: Schwellenbild
- 6.: Histogrammbild
- 7.: Bild
- 8.: Bild
- 9.: Binarisierung
- 10.: Binarisierte Bildserie
- 11.: Punkt
- 12.: Ausblendungsschablone
- 13.: Bildhintergrundabtrennung
- 14.: Komprimierte Bildserie
- 15.: Maskierung
- 16.: Maskierte Bildserie
- 17.: Auswertung
- 18.: Sensorbereich
- 19.: Schwellenwert zur Fleckenpixelermittlung
- 20.: Häufigkeit
- 21.: Schwellenwert
- 22.: Bereich
- 23.: Signalanteil
- 24.: Signalanteil
- 25.: Operation

## Patentansprüche

1. Verfahren zur Erkennung von Rissen und vergleichbaren, Strahlung reflektierenden, strukturellen Defekten in den Wandungen von Hohlglasartikeln (1), wobei eine von Strahlungselementen emittierte, an dem Hohlglasartikel (1) reflektierte statische, Störreflexionen und dynamische, Defekte indizierende Reflexionen enthaltende Strahlung mittels mehrerer, ortsfest relativ zu dem um seine Längsachse (2) rotierenden Hohlglasartikel (1) durch mit Abstand voneinander angeordnete Strahlungsempfangselemente empfangen, als eine ursprüngliche, aus mehreren, nach Maßgabe unterschiedlicher Aufnahmewinkel aufgenommenen Bildern (3) bestehende Bildserie (4) dargestellt und einer Auswertung zugeführt wird, **dadurch gekennzeichnet, dass** aus der ursprünglichen Bildserie (4) eine binarisierte, statische und dynamische Reflexionen enthaltende Bildserie (10) hergestellt wird, dass die Bildserie (10) zwecks Erstellung eines zweidimensionalen, die Häufigkeitswerte der statischen und dynamischen Anteile aller Bilder der ursprünglichen Bildserie (4) aufsummierend darstellenden Histogrammbildes (6) bearbeitet wird, dass das Histogrammbild (6) weiter zwecks Erstellung einer lediglich statische Reflexionen enthaltenden Ausblendungsschablone (12) bearbeitet wird, dass ausgehend von der ursprünglichen Bildserie (4) eine komprimierte, sowohl statische als auch dynamische Reflexionen enthaltende Bildserie (14) erstellt wird, dass die Bildserie (14) mit der Ausblendungsschablone (12) zwecks Ausblendung der Bereiche statischer Reflexionen und Herstellung einer maskierten Bildserie (16) des Hohlglasartikels (1) maskiert wird, und dass die Bilder der Bildserie (16) zur Erkennung der genannten Defekte verwendet werden.

2. Verfahren nach Anspruch 1, **dadurch gekennzeichnet**, **dadurch gekennzeichnet, dass** die weitere Bearbeitung des Histogrammbildes (6) zwecks Erstellung der Ausblendungsschablone (12) durch eine Binarisierung nach Maßgabe eines Schwellenwertes (Anzahl der Bilder - x) erfolgt.

3. Verfahren nach Anspruch 2, **dadurch gekennzeichnet, dass** x eine positive ganze Zahl mit x ≥ 1 ist.

4. Verfahren nach einem der Ansprüche 1 bis 3, **dadurch gekennzeichnet, dass** in dem Histogrammbild (6) die Sensorbereiche (18) sowie die Lage der genannten Pixel zusammengestellt werden.

5. Verfahren nach einem der Ansprüche 1 bis 4, **dadurch gekennzeichnet, dass** in jedem Bild der Bildserien (4, 10, 14, 16) mehrere Sensorbereiche (18) zusammengefasst sind.

6. Verfahren nach einem der Ansprüche 1 bis 5, **dadurch gekennzeichnet, dass** eine Binarisierung der ursprünglichen Bildserie (4) mittels eines Grauwert-Schwellenbildes (5) durchgeführt wird, wobei den Sensorbereichen (18) eines jeden Bildes der Bildserie (4) unterschiedliche, unter anderem von der Position der Strahlungsempfangselemente abhängige Schwellenwerte (19) zugeordnet werden.

7. Verfahren nach Anspruch 6, **dadurch gekennzeichnet, dass** aus dem Histogrammbild (6) durch Binarisierung und gegebenenfalls weitere Bearbeitung ein zweidimensionales, als Ausblendungsschablone (12) nutzbares Bild (8) hergestellt wird.

8. Verfahren nach Anspruch 6, **dadurch gekennzeichnet, dass** die weitere Bearbeitung des Histogrammbildes (6) zwecks Gewinnung der Ausblendungsschablone (12 durch eine morphologische Operation und/oder eine Schwellenwertbinarisierung durchgeführt wird.

9. Verfahren nach einem der Ansprüche 1 bis 8, **dadurch gekennzeichnet, dass** die Bilder der maskierten Bildserie (16) einzeln in beliebiger Reihenfolge zwecks Erkennung von Defekten ausgewertet werden.

10. Verfahren nach einem der Ansprüche 1 bis 9, **dadurch gekennzeichnet, dass** die Bildserien (4, 10, 14, 16) aus einer durch die Anzahl der Umdrehungen des Hohlglasartikels (1) um seine Längsachse (2) bestimmten Anzahl an Bildern bestehen, welche den Hohlglasartikel(1) bzw. Bereiche desselben unter unterschiedlichen Drehwinkeln darstellen.

11. Verfahren nach einem der Ansprüche 1 bis 10, **dadurch gekennzeichnet, dass** jedes Bild der Bildserien (4, 10, 14, 16) aus einer der Anzahl der Strahlungsempfangselemente entsprechenden Anzahl von Sensorbereichen (18) besteht.

## Claims

1. Method for detecting flaws and comparable, radiation-reflecting structural defects in the walls of hollow glass articles (1), wherein static radiation which is emitted by radiation elements, is reflected on the hollow glass article (1) and contains interference reflections and dynamic, defect-indicating reflections is received by means of a plurality of radiation-receiving elements arranged spaced apart from one another and fixed in place relative to the hollow glass article (1) rotating about its longitudinal axis (2), is displayed as an original image series (4) consisting of a plurality of images (3) recorded based upon different recording angles and is directed to an evaluator, **characterised in that** from the original image series (4) a binarized image series (10) containing static and dynamic reflections is produced, **in that** the image series (10) is processed for the purpose of generating a two-dimensional histogram image (6) which displays the cumulative frequency values of the static and dynamic components of all images of the original image series (4), **in that** the histogram image (6) is further processed for the purpose of generating a fade-out mask (12) containing merely static reflections, **in that** a compressed image series (14) containing both static and dynamic reflections is generated proceeding from the original image series (4), **in that** the image series (14) is masked with the fade-out mask (12) for the purpose of fading out the regions of static reflections and for producing a masked image series (16) of the hollow glass article (1), and **in that** the images of the image series (16) are used for detecting said defects.

2. Method as claimed in claim 1, **characterised in that** the histogram image (6) is further processed for the purpose of generating the fade-out mask (12) by means of binarization based on a threshold value (number of images - x).

3. Method as claimed in claim 2, **characterised in that** x is a positive integer with x ≥ 1.

4. Method as claimed in any one of claims 1 to 3, **characterised in that** the sensor regions (18) and the position of said pixels are compiled in the histogram image (6).

5. Method as claimed in any one of claims 1 to 4, **characterised in that** a plurality of sensor regions (18) are combined in each image of the image series (4, 10, 14, 16).

6. Method as claimed in any one of claims 1 to 5, **characterised in that** the original image series (4) is binarized by means of a grey scale threshold image (5), wherein the sensor regions (18) of each image of the image series (4) are allocated different threshold values (19) which depend *inter alia* upon the position of the radiation-receiving elements.

7. Method as claimed in claim 6, **characterised in that** a two-dimensional image (8) which can be used as a fade-out mask (12) is produced from the histogram image (6) by means of binarization and, where appropriate, further processing.

8. Method as claimed in claim 6, **characterised in that** the histogram image (8) is further processed for the purpose of obtaining the fade-out mask (12) by means of a morphological operation and/or a threshold value binarization.

9. Method as claimed in any one of claims 1 to 8, **characterised in that** the images of the images of the masked image series (16) are individually evaluated in any sequence for the purpose of detecting defects.

10. Method as claimed in any one of claims 1 to 9, **characterised in that** the image series (4, 10, 14, 16) consist of a number of images which is determined by the number of rotations of the hollow glass article (1) about its longitudinal axis (2), which images represent the hollow glass article (1) or regions thereof at different rotational angles.

11. Method as claimed in any one of claims 1 to 10, **characterised in that** each image of the image series (4, 10, 14, 16) consists of a number of sensor regions (18) corresponding to the number of radiation-receiving elements.

## Revendications

1. Procédé servant à identifier des fissures et des défauts structurels comparables réfléchissant un rayonnement dans les parois d'articles en verre creux (1), dans lequel un rayonnement émettant des éléments de rayonnement statiques réfléchis au niveau de l'article en verre creux (1) contenant des réflexions parasites et des réflexions dynamiques indiquant des défauts est reçu au moyen de plusieurs éléments de réception de rayonnement disposés à distance les uns des autres de manière stationnaire par rapport à l'article en verre creux (1) tournant autour de son axe longitudinal (2), est représenté en tant qu'une série d'images (4) d'origine constituée de plusieurs images (3) reçues selon des angles de réception différents et est amené à une évaluation, **caractérisé en ce qu'**une série d'images (10) binarisée contenant des réflexions statiques et dynamiques est produite à partir de la série d'images (4) d'origine, que la série d'images (10) est traitée aux fins de la création d'une image d'histogramme (6) bidimensionnelle représentant en cumulé les valeurs de fréquence des fractions statiques et dynamiques de toutes les images de la série d'images (4) d'origine, que l'image d'histogramme (6) est traitée par ailleurs aux fins de la création d'un gabarit d'élimination (12) contant des réflexions seulement statiques, qu'une série d'images (14) comprimée contenant à la fois des réflexions statiques et dynamiques est créée en partant de la série d'images (4) d'origine, que la série d'images (14) est masquée avec le gabarit d'élimination (12) aux fins de l'élimination des zones de réflexions statiques et de la production d'une série d'images (16) masquée de l'article en verre creux (1), et que les images de la série d'images (16) sont utilisées pour identifier les défauts mentionnés.

2. Procédé selon la revendication 1, **caractérisé en ce que** le traitement ultérieur de l'image d'histogramme (6) est effectué aux fins de la création du gabarit d'élimination (12) par une binarisation conformément à une valeur de seuil (nombre des images - x).

3. Procédé selon la revendication 2, **caractérisé en ce que** x est un nombre entier positif avec x ≥ 1.

4. Procédé selon l'une quelconque des revendications 1 à 3, **caractérisé en ce que** les zones de capteur (18) ainsi que la position des pixels mentionnés sont rassemblées dans l'image d'histogramme (6).

5. Procédé selon l'une quelconque des revendications 1 à 4, **caractérisé en ce que** plusieurs zones de capteur (18) sont regroupées dans chaque image des séries d'images (4, 10, 14, 16).

6. Procédé selon l'une quelconque des revendications 1 à 5, **caractérisé en ce qu'**une binarisation de la série d'images (4) d'origine est mise en œuvre au moyen d'une image seuillée en valeurs de gris (5), dans lequel différentes valeurs de seuil (19) dépendant entre autres de la position des éléments de réception de rayonnement sont associées aux zones de capteur (18) de chaque image de la série d'images (4).

7. Procédé selon la revendication 6, **caractérisé en ce qu'**une image (8) bidimensionnelle pouvant être utilisée en tant que gabarit d'élimination (12) est produite à partir de l'image d'histogramme (6) par binarisation et éventuellement par un traitement ultérieur.

8. Procédé selon la revendication 6, **caractérisé en ce que** le traitement ultérieur de l'image d'histogramme (6) est mis en œuvre aux fins de l'obtention du gabarit d'élimination (12) par une opération morphologique et/ou une binarisation de valeur seuillée.

9. Procédé selon l'une quelconque des revendications 1 à 8, **caractérisé en ce que** les images de la série d'images (16) masquée sont évaluées individuellement dans un ordre quelconque aux fins de l'identification de défauts.

10. Procédé selon l'une quelconque des revendications 1 à 9, **caractérisé en ce que** les séries d'images (4, 10, 14, 16) sont constituées d'un nombre d'images défini par le nombre des révolutions de l'article en verre creux (1) autour de son axe longitudinal (2), lesquelles représentent l'article en verre creux (1) ou des zones de celui-ci selon des angles de rotation différents.

11. Procédé selon l'une quelconque des revendications 1 à 10, **caractérisé en ce que** chaque image des séries d'images (4, 10, 14, 16) est constituée d'un nombre de zones de capteur (18) correspondant au nombre des éléments de réception de rayonnement.
